# EUROPÄISCHE PATENTSCHRIFT

(11) **EP 2 497 292 B1**
(45) Veröffentlichungstag und Bekanntmachung des Hinweises auf die Patenterteilung: **23.03.2016**
(21) Anmeldenummer: 10763629.2
(22) Anmeldetag: 07.10.2010
(51) Int. Cl.: H04W 24/08, H04B 17/40

(54) **MESSVORRICHTUNG UND MESSVERFAHREN ZUR VERMESSUNG VON MOBILFUNK-RELAY-STATIONEN**
MEASURING DEVICE AND MEASURING METHOD FOR MEASURING MOBILE RADIO RELAY STATIONS
DISPOSITIF ET PROCÉDÉ DE MESURE POUR LE MESURAGE DE STATIONS-RELAIS DE RADIOCOMMUNICATION MOBILE

(30) Priorität: 03.11.2009 DE 102009051739
(43) Veröffentlichungstag der Anmeldung: 12.09.2012
(73) Patentinhaber: Rohde & Schwarz GmbH & Co. KG, 81671 München (DE)
(72) Erfinder: GEßNER, Christina, 81673 München (DE); SCHLIENZ, Jürgen, 85586 Poing (DE)
(74) Vertreter: Körfer, Thomas
(86) Internationale Anmeldenummer: PCT/EP2010/006138
(87) Internationale Veröffentlichungsnummer: WO 2011/054427

(56) Entgegenhaltungen:
- EP-A1- 1 300 986
- GB-A- 2 424 346
- US-A1- 2006 128 399

## Beschreibung

Die Erfindung betrifft eine Messvorrichtung zur Vermessung von Mobilfunk-Umsetzer-Stationen (im Folgenden Mobilfunk-Relay-Stationen) und ein Messverfahren zur Vermessung von Mobilfunk-Relay-Stationen, insbesondere von zellulären Mobilfunknetzen z. B. nach den Standards GSM, UMTS, 3G, LTE.

In gegenwärtigen Mobilfunksystemen sind Mobilstationen direkt über eine Funkverbindung mit Basisstationen verbunden. Jede Basisstation deckt dabei eine bestimmte Reichweite ab. Lediglich Mobilstationen, welche sich innerhalb dieser Reichweite befinden, können mit der Basisstation Kontakt aufnehmen. So zeigt die Europäische Patentanmeldung EP 1 478 115 A1 ein Kommunikationssystem, bei welchem eine Mehrzahl von Mobilstationen mit jeweils einer einzelnen Basisstation in Verbindung steht. Nachteilhaft ist hier, dass die Reichweite der Basisstationen stark von ihrem Standort und der umgebenden Bebauung abhängt.

Zur Erhöhung der Reichweite bzw. zur Verbesserung der Empfangsbedingungen ist darüber hinaus der Einsatz von Relay-Stationen bekannt. Dabei erfolgt die Verbindung der Mobilstation zur Basisstation nicht auf direktem Wege. Stattdessen ist die Mobilstation mit einer Relay-Station verbunden, welche wiederum mit der Basisstation verbunden ist. So zeigt die deutsche Offenlegungsschrift DE 199 55 503 A1 ein Kommunikationssystem, welches Relay-Stationen zur Erhöhung der Reichweite einsetzt.

Die Offenlegungsschrift EP 1 300 986 offenbart einen Vergleich zwischen einem ersten und einem zweiten Signal im Hinblick auf die Vermessung des Übertragungsverhaltens einer Übertragungsstrecke zwischen einem Signalort, in dem das erste Signal gesendet wird, und einem Signalort, in dem das zweite Signal gemessen wird.

Die Offenlegungsschrift US 2006/0128399 offenbart ein Verfahren zur Ermittlung der Position eines Mobilfunkgerätes in Relation zu einer benachbarten Relay-Station.

Bislang sind jedoch keine Messgeräte oder Messverfahren bekannt, welche eine Vermessung der Umsetzer-Station (im Folgenden Relay-Station) unter normalen Arbeitsbedingungen erlauben.

Der Erfindung liegt die Aufgabe zu Grunde, eine Messvorrichtung und ein Messverfahren zur Vermessung von Mobilfunk-Relay-Stationen zu schaffen.

Die Aufgabe wird erfindungsgemäß für die Vorrichtung durch die Merkmale des unabhängigen Anspruchs 1 und für das Verfahren durch die Merkmale des unabhängigen Anspruchs 5 gelöst. Vorteilhaft Weiterbildungen sind Gegenstand der hierauf rückbezogenen Unteransprüche.

Eine erfindungsgemäße Messvorrichtung zur Vermessung von Mobilfunk-Relay-Stationen verfügt über zumindest eine Antenne und eine Verarbeitungseinrichtung. Eine Basisstation oder eine Mobilstation sendet ein erstes Signal an eine Relay-Station. Die Relay-Station erzeugt ein von dem ersten Signal abgeleitetes zweites Signal und sendet es aus. Die Antenne der Messvorrichtung empfängt das erste Signal und das zweite Signal. Die Verarbeitungseinrichtung der Messvorrichtung vergleicht die empfangenen Signale. Eine Überprüfung der Funktion der Relay-Station ist so möglich.

Die Verarbeitungseinrichtung führt eine Korrelation des ersten Signals und des zweiten Signals durch. So ist eine genaue Vermessung der Funktion der Relay-Station möglich.

Die Verarbeitungseinrichtung führt bevorzugt eine Synchronisierung des ersten Signals und des zweiten Signals durch. Die Verarbeitungseinrichtung nutzt für die Synchronisierung bevorzugt Synchronisierungssymbole des ersten Signals und des zweiten Signals. So ist eine aufwandsarme genaue Vermessung der Funktion der Relay-Station möglich.

Die Verarbeitungseinrichtung nutzt für die Synchronisierung vorteilhafterweise Rahmennummern des ersten Signals und des zweiten Signals. So können die Signale selbst bei Verschlüsselung der Nutzdaten verglichen werden.

Die Verarbeitungseinrichtung ermittelt einen Zeitversatz des ersten Signals und des zweiten Signals. So kann die Echtzeit-Erfordernis an die Relay-Station für bestimmte Verbindungstypen überprüft werden.

Die Messvorrichtung ist vorteilhafterweise mit der Mobilstation verbunden. Die Messvorrichtung empfängt bevorzugt von der Mobilstation Daten, welche die Mobilstation von der Relay-Station empfangen hat oder welche die Mobilstation an die Relay-Station gesendet hat. Die Messvorrichtung vergleicht bevorzugt die empfangenen Daten mit dem ersten Signal und mit dem zweiten Signal. So ist eine Nutzung übertragener Nutzdaten zur Erhöhung der Genauigkeit der Vermessung möglich.

Nachfolgend wird die Erfindung anhand der Zeichnung, in der vorteilhaft Ausführungsbeispiele der Erfindung gezeigt sind, beispielhaft beschrieben. In der Zeichnung zeigen:
- Fig. 1: ein beispielhaftes Kommunikationssystem;
- Fig. 2: die Struktur eines Senderahmens in einem beispielhaften Kommunikationssystem;
- Fig. 3: ein erstes Ausführungsbeispiel der erfindungsgemäßen Messvorrichtung;
- Fig. 4: ein zweites Ausführungsbeispiel der erfindungsgemäßen Messvorrichtung;
- Fig. 5: ein erstes Ausführungsbeispiel des erfindungsgemäßen Messverfahrens, und
- Fig. 6: ein zweites Ausführungsbeispiel des erfindungsgemäßen Messverfahrens.

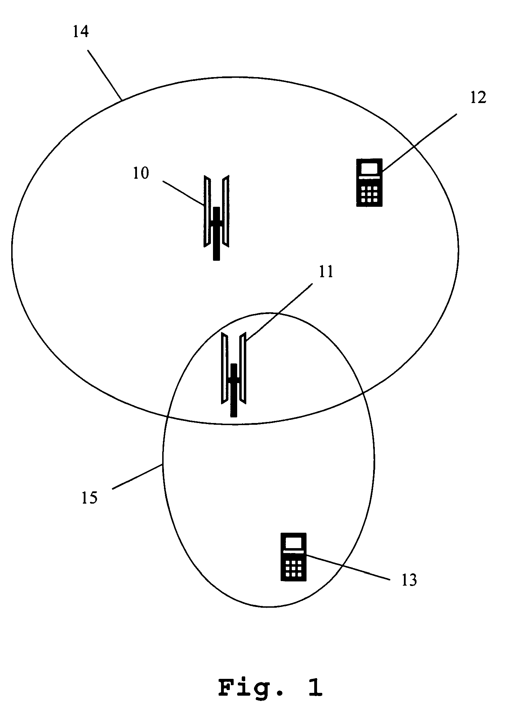

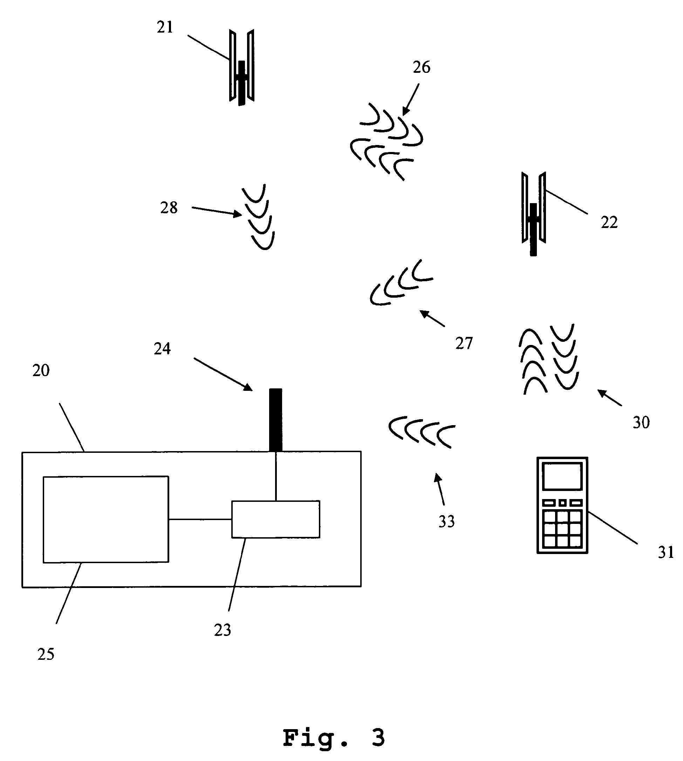

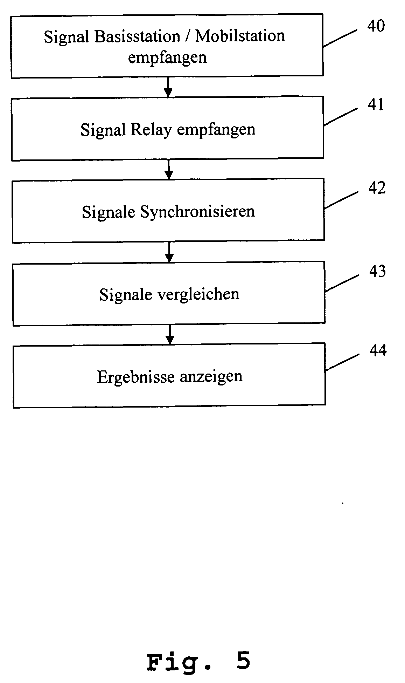

Zunächst wird anhand der Fig. 1 - 2 der Aufbau und die Funktionsweise eines beispielhaften Kommunikationssystems erläutert. Mittels Fig. 3 - 4 wird der Aufbau und die Funktionsweise der erfindungsgemäßen Messvorrichtung dargestellt. Abschließend wird anhand der Fig. 5 - 6 die Funktionsweise des erfindungsgemäßen Messverfahrens erläutert. Identische Elemente wurden in ähnlichen Abbildungen zum Teil nicht wiederholt dargestellt und beschrieben.

Fig. 1 zeigt ein beispielhaftes Kommunikationssystem. Eine Basisstation 10 verfügt über eine bestimmte Reichweite 14. Eine Mobilstation 12, welche sich innerhalb der Reichweite 14 der Basisstation 10 befindet, kommuniziert direkt mit der Basisstation 10. Eine Mobilstation 13, welche sich außerhalb der Reichweite 14 der Basisstation 10 befindet, kann nicht direkt mit dieser kommunizieren. Stattdessen ist die Basisstation 10 weiterhin mit einer Relay-Station 11 verbunden. Die Relay-Station 11 befindet sich beispielsweise am Rand der Reichweite 14 der Basisstation 10. Eine Mobilstation 13, welche sich außerhalb der Reichweite 14 der Basisstation 10 aber innerhalb der Reichweite 15 der Relay-Station 11 befindet, kommuniziert mit der Relay-Station 11. Die Relay-Station 11 leitet die Kommunikation an die Basisstation 10 weiter.

Es ist dabei zwischen unterschiedlichen Typen von Relay-Stationen zu unterscheiden. Eine Typ 1 Relay-Station empfängt von der Basisstation ausgesendete Signale, verstärkt diese und sendet sie üblicherweise erneut auf derselben Frequenz aus. Der Empfang, die Verstärkung und das erneute Aussenden verursachen dabei einen Zeitversatz. Um keine Interferenz der von der Basisstation ausgesendeten Signale und der von der Relay-Station ausgesendeten Signale zu verursachen, sendet die Typ 1 Relay-Station lediglich während die Basisstation nicht sendet. D.h. die Basisstation und die Relay-Station wechseln sich mit Senden und Empfangen ab. Eine mit der Relay-Station verbundene Mobilstation bemerkt nicht, dass sie nicht direkt mit der Basisstation kommuniziert. Da die Signale der Basisstation lediglich analog verstärkt werden, ergibt sich gegenüber den Signalen der Basisstation keine Veränderung. Nachteilhaft an Typ 1-Relay-Stationen ist jedoch, dass Störungen der Übertragung von der Basisstation zur Relay-Station von der Relay-Station verstärkt und erneut ausgesendet werden.

Der Zeitversatz einer Typ 1-Relay-Station kann zusätzlich verringert werden, indem die Relay-Station eine abweichendere Frequenz nutzt als die Basisstation. Ein gleichzeitiges Senden und Empfangen der Basisstation und der Relay-Station ohne Interferenzen ist so möglich.

Eine bessere Qualität der Übertragung kann mit einer Typ 2 Relay-Station erreicht werden. Eine solche Relay-Station empfängt von der Basisstation ausgesendete Signale, demoduliert diese und gewinnt die digitalen Daten zurück. Die digitalen Daten werden anschließend erneut moduliert und ausgesendet. Störungen auf der Übertragungsstrecke zwischen der Basisstation und der Relay-Station können so ausgeglichen werden. Ein Frequenzwechsel ist so auch sehr einfach möglich. Eine Typ 2 Relay-Station verursacht jedoch bereits einen erheblich höheren Aufwand als eine Typ 1 Relay-Station. Für eine Mobilstation, welche mit einer Typ 2 Relay-Station verbunden ist, ist wie auch bei der Typ 1 Relay-Station, nicht ersichtlich, dass sie mit einer Relay-Station verbunden ist. Die Signale, welche von einer Typ 2-Relay-Station ausgesendet werden, entsprechen den Signalen, welche von der Basisstation ausgesendet werden. Sowohl die Basisstation wie auch die Relay-Station vom Typ 2 nutzen dabei dieselbe Zellennummer (Cell ID).

Gegenüber der Typ 1 Relay-Station ermöglicht die Typ 2-Relay-Station eine größere Flexibilität des Einsatzes.

Eine noch größere Flexibilität ermöglicht der Einsatz einer Typ 3 Relay-Station. Eine solche nutzt eine eigene Zellennummer (Cell ID) gegenüber der Basisstation. Für die Mobilstation erscheint die Relay-Station als eigenständige Basisstation. Die Basisstation wird somit von Verwaltungsaufgaben entlastet, welche nun die Typ 3-Relay-Station ausführt. Ein Teil der Verwaltungsaufgaben kann jedoch bei der mit der Typ3 Relay-Station verbundenen Basisstation verbleiben. Auch hier ist ein Frequenzwechsel sehr einfach durchführbar.

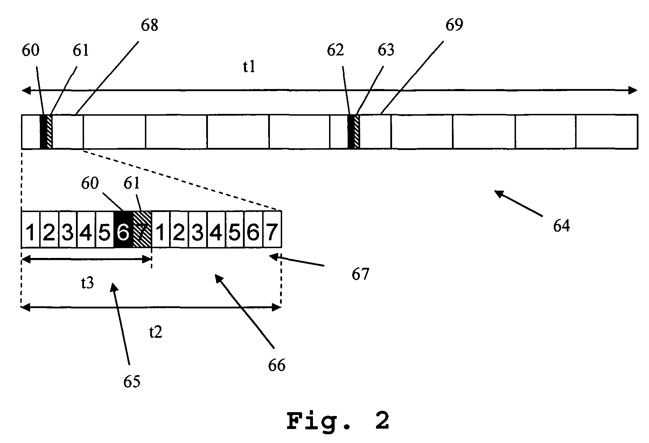

In einem beispielhaften Kommunikationssystem, hier LTE, sind die ausgesendeten Signale strukturiert. Fig. 2 zeigt eine solche Struktur eines Sendesignals. Ein Senderahmen (frame) einer Länge t1, beispielsweise 10ms, ist in eine Mehrzahl von Unterrahmen 64 (sub-frame) aufgegliedert. Die Unterrahmen 64 verfügen dabei über eine einheitliche Länge t2, von beispielsweise 1ms. Jeder Unterrahmen 64 ist weiterhin in Schlitze (slots) 65, 66 aufgegliedert. Jeder Schlitz 65, 66 verfügt dabei ebenfalls über eine einheitliche Länge t3, von beispielsweise 0,5ms. Jeder Schlitz 65, 66 beinhaltet wiederum eine festgelegte Anzahl von Sendesymbolen 67. In diesem Beispiel beinhaltet jeder Schlitz 65, 66 sieben Sendesymbole 67.

Der überwiegende Teil der Sendesymbole 67 wird dabei zur Übertragung von Nutzdaten eingesetzt. Zur Synchronisation werden einige Sendesymbole 60, 61 jedoch mit bekannten Synchronisationssymbolen gefüllt. Die Synchronisationssymbole werden dabei im Verlauf des Senderahmens einmal wiederholt. Es werden somit zu Beginn des Senderahmens die Synchronisationssymbole 60, 61 und in der Mitte des Senderahmens die Synchronisationssymbole 62, 63 gesendet. Als Teil der Synchronisationssymbole 60, 61, 62, 63 wird dabei die Nummer des Senderahmens übertragen. Diese Nummer ist dabei ausreichend eindeutig, um über auch einen langen Zeitraum einzelne Senderahmen sicher identifizieren zu können.

In Fig. 3 wird ein erstes Ausführungsbeispiel der erfindungsgemäßen Messvorrichtung gezeigt. Ein Messgerät 20 verfügt über eine Antenne 24, eine damit verbundene Verarbeitungseinrichtung 23 und eine damit verbundene Anzeigeeinrichtung 25. Eine Basisstation 21 ist über eine Kommunikationsverbindung 26 mit einer Relay-Station 22 verbunden. Die Relay-Station 22 ist über eine Kommunikationsverbindung 30 mit einer Mobilstation 31 verbunden.

Das Messgerät 20 empfängt mittels seiner Antenne 24 ein von der Basisstation 21 ausgesendetes Signal 28 und ein von der Relay-Station 22 ausgesendetes Signal 27. Das von der Basisstation ausgesendete Signal 28 entspricht dem Sendesignal der Kommunikationsverbindung 26 von der Basisstation 21 an die Relay-Station 22. Das von der Messvorrichtung 20 mit ihrer Antenne 24 empfangene Signal 27 entspricht, falls die Basisstation 21 sendet, dem Sendesignal der Kommunikationsverbindung 30 von der Relay-Station 22 an die Mobilstation 31. Falls die Mobilstation 31 sendet, entspricht das Signal 27 dem Sendesignal der Kommunikationsverbindung 26 von der Relay-Station 22 an die Basisstation 21. Alternativ empfängt die Messvorrichtung 20 mit ihrer Antenne 24 ein Signal 33 von der Mobilstation 31 statt dem Signal 28 von der Basisstation 21. Das Signal 33 entspricht dabei dem von der Mobilstation 31 an die Relay-Station 22 ausgesendeten Signal.

Die Signale 27, 28, 33 werden von der Antenne 24 an die Verarbeitungseinrichtung 23 weitergeleitet. Die Verarbeitungseinrichtung 23 demoduliert die Signale 27, 28, 33 und vergleicht die demodulierten Signale 27, 28, 33 miteinander.

Handelt es sich bei der Relay-Station 22 um eine Typ 1 oder Typ 2 Relay-Station, so führt die Verarbeitungseinrichtung 23 eine Korrelation der demodulierten Signale 27, 28, 33 durch. Mittels der Korrelation wird eine Synchronisierung der demodulierten Signale 27, 28, 33 von der Verarbeitungseinrichtung 23 durchgeführt. Ausgehend von dieser Synchronisierung wird der zeitliche Versatz zwischen den Signalen 27, 28, 33 ermittelt. Zusätzlich kann eine Frequenzumsetzung durch die Relay-Station 22 überprüft werden. Dabei wird ermittelt, wie hoch die Genauigkeit der Frequenzumsetzung ist. Darüber hinaus kann von der Relay-Station 22 verursachtes Rauschen ermittelt werden.

Handelt es sich bei der Relay-Station 22 um eine Typ 1 Relay-Station, welche auf derselben Sendefrequenz arbeitet, wie die Basisstation 21, so empfängt die Relay-Station 22 zunächst das Signal der Basisstation 21 bzw. der Mobilstation 31 und beginnt anschließend mit dem Senden des Signals an die Mobilstation 31 bzw. an die Basisstation 21. Die Messvorrichtung empfängt hier die Signale 27 und 28 bzw. 33 zeitversetzt.

Handelt es sich bei der Relay-Station 22 um eine Typ 3-Relay-Station, werden die Signale 27, 28, 33 von der Verarbeitungseinrichtung 23 demoduliert und anschließend dekodiert. Die resultierenden Daten werden daraufhin miteinander verglichen.

Bei Typ 2- und Typ 3-Relay-Stationen eignet sich zur Synchronisierung insbesondere die Rahmennummer (frame number). Diese wird aus den Signalen 27, 28, 33 von der Verarbeitungseinrichtung 23 extrahiert. Aus dem zeitlichen Abstand des Eintreffens identischer Senderahmen bei dem Messgerät 20 wird die Zeitverzögerung zwischen der Basisstation 21 und der Relay-Station 22 bzw. zwischen der Relay-Station 22 und der Mobilstation 31 ermittelt.

In diesem Fall empfängt die Relay-Station das Signal der Basisstation 21 bzw. der Mobilstation 31 und beginnt vor Abschluss des Empfangs mit dem Senden des Signals an die Mobilstation 31 bzw. die Basisstation 21, sofern eine unterschiedliche Sendefrequenz genutzt wird. Die Messvorrichtung empfängt die Signale 27, 28, 33 gleichzeitig.

Da in üblichen Kommunikationssystemen zumindest die Nutzdaten verschlüsselt werden, ist ein einfacher Vergleich der von der Basisstation 21 ausgesendeten Nutzdaten mit den von der Relay-Station 22 ausgesendeten Nutzdaten und von der Mobilstation 31 ausgesendeten Nutzdaten zumindest bei Typ 2 und Typ 3 Relay-Stationen nicht möglich. Dort findet jeweils in der Basisstation 21, der Relay-Station 22 und der Mobilstation 31 eine getrennte Verschlüsselung statt. Bestimmte Steuerungsinformationen, welche in den übertragenen Signalen enthalten sind, werden jedoch nicht verschlüsselt. Insbesondere Pilotsymbole bzw. Referenzsymbole bzw. Synchronisationssymbole, welche bereits vor der Übertragung bekannt sind, werden nicht verschlüsselt. Zur Vermessung von Typ 2 bzw. Typ 3 Relay-Stationen werden deshalb diese Signale herangezogen.

Alternativ zur Synchronisierung mittels Rahmennummern können zusätzlich in die ausgesendeten Datenströme bekannte weitere Daten integriert werden. Die Messvorrichtung 20 ermittelt dann den zeitlichen Abstand zwischen dem Empfang der zusätzlich eingeführten weiteren bekannten Daten von der Basisstation 21, der Relay-Station 22 und der Mobilstation 31.

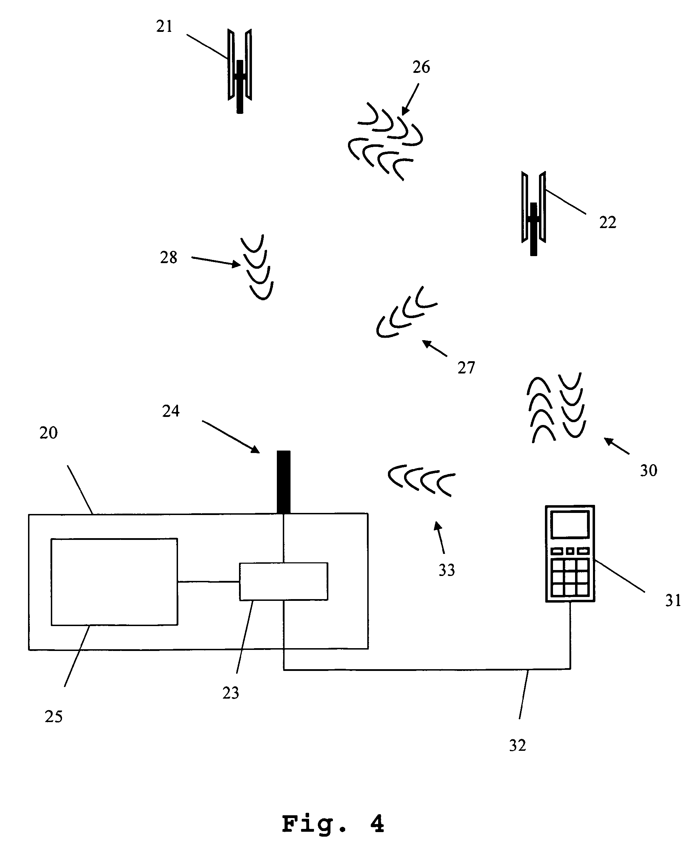

In Fig. 4 wird ein zweites Ausführungsbeispiel der erfindungsgemäßen Messvorrichtung dargestellt. Die Vorrichtung entspricht weitgehend der Vorrichtung aus Fig. 3. Zusätzlich ist hier jedoch die Mobilstation 31 über eine Verbindung 32 mit der Verarbeitungseinrichtung 23 des Messgeräts 20 verbunden. Bei der Verbindung kann es sich um eine Verbindungsleitung aber auch um eine drahtlose Verbindung handeln. Über die Verbindung 32 werden von der Mobilstation 31 die Daten, welche von der Mobilstation 31 empfangen und gesendet werden, zusätzlich an die Verarbeitungseinrichtung 23 des Messgeräts 20 übertragen.

Die Verarbeitungseinrichtung 23 vergleicht hier zusätzlich zu den Signalen 27, 28, 33 weiterhin die von der Mobilstation 31 übertragenen Daten. Insbesondere bei Typ 2 und Typ 3 Relay-Stationen ist so weiterhin eine Überprüfung der Sendungsplanung (Scheduling) möglich. So kann die von der Mobilstation wahrgenommene Leistung der Relay-Station vermessen werden. Insbesondere können so über die Auswertung der Protokoll- und Kontrollinformationen auch der Weg eines einzelnen Pakets mit Nutzdaten nachverfolgt werden. Im Falle von Relays mit eigener Sendungsplanungs-Funktion (Scheduling-Funktion) können auch der Durchsatz auf der Verbindung zwischen der Basisstation 21 und der Relay-Station 22 und der Durchsatz auf der Verbindung zwischen der Mobilstation 31 und der Relay-Station 22 verglichen werden.

Fig. 5 zeigt ein erstes Ausführungsbeispiel des erfindungsgemäßen Messverfahrens. In einem ersten Schritt 40 werden von einem Messgerät die von einer Basisstation und/oder von einer Mobilstation ausgesendeten Signale empfangen. Die Mobilstation und die Basisstation sind dabei mittels einer Relay-Station miteinander verbunden.

In einem zweiten Schritt 41 werden von einem Messgerät die von einer mit der Basisstation bzw. der Mobilstation verbundenen Relay-Station ausgesendeten Signale empfangen. Die von der Relay-Station ausgesendeten Signale entsprechen dabei den durch das Relay umgesetzten Signalen, welche die Basisstation ausgesendet hat und/oder welche die Mobilstation ausgesendet hat.

In einem dritten Schritt 42 werden die Signale der Basisstation und/oder der Mobilstation und der Relay-Station synchronisiert. Sofern es sich bei der Relay-Station um eine Typ 1 Relay-Station handelt, erfolgt die Synchronsierung am analogen bzw. digitalisierten analogen Signal. Auch eine Demodulation und ein Vergleich der demodulierten Signale sind möglich. Eine weitere Aufbereitung der Signale erfolgt in diesem Fall nicht.

Handelt es sich bei der Relay-Station um eine Typ 2 oder Typ 3 Relay-Station, werden die Signale der Basisstation bzw. der Mobilstation und der Relay-Station zunächst in jedem Fall demoduliert. Eine zusätzliche Dekodierung der Signale der Basisstation und der Relay-Station ist hier ebenfalls möglich.

In einem vierten Schritt 43 werden die synchronisierten Signale der Basisstation und/oder Mobilstation und der Relay-Station miteinander verglichen. Dabei wird zumindest ein Parameter, welcher die Qualität der durch die Relay-Station erzeugten Signale anzeigt, bestimmt. Ein solcher Parameter ist beispielsweise die Zeitverzögerung der Signale. Eine Bestimmung mehrerer solcher Parameter in diesem Schritt ist ebenfalls denkbar. In einem fünften Schritt 44 werden die im vierten Schritt 43 ermittelten Ergebnisse angezeigt.

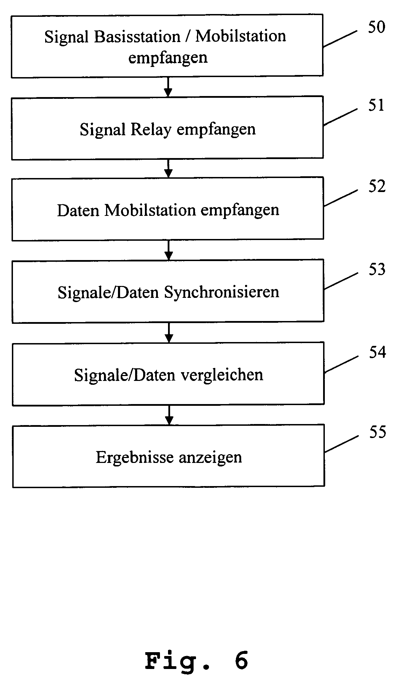

In Fig. 6 wird ein zweites Ausführungsbeispiel des erfindungsgemäßen Messverfahrens gezeigt. Die Schritte 50 und 51 entsprechen den Schritten 40, 41 aus Fig. 5. Es wird hier nicht weiter auf diese Schritte eingegangen. Die von der Basisstation bzw. der Mobilstation ausgesendeten Signale werden von der Relay-Station empfangen, von dieser umgesetzt und erneut ausgesendet. Die von der Relay-Station ausgesendeten Signale werden von der Mobilstation bzw. der Basisstation empfangen. Die Mobilstation digitalisiert und demoduliert die Signale. Weiterhin dekodiert die Mobilstation die Signale.

In einem dritten Schritt 52 werden von der Mobilstation empfangene oder ausgesendete Daten von dem Messgerät über eine Verbindung empfangen. Bei den von der Mobilstation empfangenen bzw. gesendeten Daten handelt es sich bevorzugt um Nutzdaten. Optional können auch Kontrollinformationen von der Mobilstation an das Messgerät übertragen werden. In einem vierten Schritt 53 werden die Signale der Basisstation und/oder der Mobilstation, der Relay-Station und die Daten der Mobilstation synchronisiert. Dieser Schritt entspricht weitgehend dem dritten Schritt 42 aus Fig. 5. Zusätzlich werden hier jedoch die von der Mobilstation übertragenen Daten mit den von der Basisstation und/oder der Mobilstation und der Relay-Station ausgesendeten Signalen synchronisiert.

In einem fünften Schritt 54 werden die synchronisierten Signale der Basisstation und/oder Mobilstation und der Relay-Station und die synchronisierten Daten der Mobilstation miteinander verglichen. Dieser Schritt entspricht weitgehend dem vierten Schritt 43 aus Fig. 5. Zusätzlich werden hier jedoch die Daten der Mobilstation mit den synchronisierten Signalen der Basisstation und/oder der Mobilstation und der Relay-Station verglichen. Erst so ist bei häufig verschlüsselten modernen Kommunikationssystemen ein Vergleich von Nutzdaten möglich. Anhand des Vergleichs wird in diesem Schritt zumindest ein Parameter, welcher die Qualität der Umsetzung der Signale der Basisstation und/oder Mobilstation durch die Relay-Station anzeigt, ermittelt. In einem sechsten Schritt 55 wird dieser zumindest eine Parameter angezeigt. Optional können mehrere solcher Parameter ermittelt und angezeigt werden.

Die Erfindung ist nicht auf das dargestellte Ausführungsbeispiel beschränkt. Wie bereits erwähnt, können unterschiedliche Kommunikationssysteme, welche Relay-Stationen einsetzen, verwendet werden. Auch ein Einsatz mit Relay-Stationen unterschiedlicher Funktionalität ist möglich. Alle vorstehend beschriebenen Merkmale oder in den Figuren gezeigten Merkmale sind im Rahmen der Erfindung beliebig vorteilhaft miteinander kombinierbar.

## Patentansprüche

1. System zur Vermessung von Mobilfunk-Relay-Stationen (22),
mit einer Messvorrichtung (20), die über zumindest eine Antenne (24) und eine Verarbeitungseinrichtung (23) verfügt,
einer Basisstation (21) oder einer Mobilstation (31), die beide jeweils derart ausgebildet sind, um ein erstes Signal (28, 33) an eine Relay-Station (22) zu senden,
und einer Relay-Station (22), die derart ausgebildet ist, um ein von dem ersten Signal (28, 33) abgeleitetes zweites Signal (27) zu erzeugen und dieses auszusenden,
wobei jede Antenne (24) der Messvorrichtung derart ausgebildet ist, um das erste Signal (28) und das zweite Signal (27) zu empfangen,
wobei die Verarbeitungseinrichtung (23) der Messvorrichtung derart ausgebildet ist, um die empfangenen Signale (27, 28) zu vergleichen, **dadurch gekennzeichnet, dass**
die Verarbeitungseinrichtung (23) derart ausgebildet ist, um eine Korrelation des ersten Signals (28, 33) und des zweiten Signals (27) zur Ermittlung eines Zeitversatzes zwischen dem zweiten Signal (27) und dem ersten Signal (28, 33) durchzuführen.

2. System nach Anspruch 1,
wobei
die Verarbeitungseinrichtung (23) derart ausgebildet ist, um eine Synchronisierung des ersten Signals (28, 33) und des zweiten Signals (27) durchzuführen, und
die Verarbeitungseinrichtung (23) derart ausgebildet ist, um für die Synchronisierung Synchronisierungssymbole (60, 61, 62, 63) des ersten Signals (28, 33) und des zweiten Signals (27) zu nutzen.

3. System nach Anspruch 2,
wobei
die Verarbeitungseinrichtung (23) derart ausgebildet ist, um für die Synchronisierung Rahmennummern des ersten Signals (28, 33) und des zweiten Signals (27) zu nutzen.

4. System nach einem der Ansprüche 1 bis 3,
wobei die Messvorrichtung mit der Mobilstation (31) verbunden ist, und die Messvorrichtung derart ausgebildet ist, um von der Mobilstation (31) Daten zu empfangen, welche die Mobilstation (31) von der Relay-Station (22) empfangen hat oder an die Relay-Station (22) gesendet hat, und die Messvorrichtung derart ausgebildet ist, um die empfangenen Daten mit dem ersten Signal (28, 33) und mit dem zweiten Signal (27) zu vergleichen.

5. Messverfahren zur Vermessung von Mobilfunk-Relay-Stationen,
wobei eine Basisstation (21) oder eine Mobilstation (31) ein erstes Signal (28, 33) an eine Relay-Station (22) sendet,
wobei die Relay-Station (22) ein von dem ersten Signal (28, 33) abgeleitetes zweites Signal (27) erzeugt und aussendet,
wobei das erste Signal (28, 33) und das zweite Signal (27) von einer Messvorichtung (20) empfangen werden,
wobei die empfangenen Signale (27, 28, 33) von der Messvorichtung (20) verglichen werden, **dadurch gekennzeichnet, dass**
eine Korrelation des ersten Signals (28, 33) und des zweiten Signals (27) zur Ermittlung eines Zeitversatzes zwischen dem zweiten Signal (27) und dem ersten Signal (28, 33) von der Messvorichtung (20) durchgeführt wird.

6. Messverfahren nach Anspruch 5,
wobei eine Synchronisierung des ersten Signals (28, 33) und des zweiten Signals (27) durchgeführt wird, und
für die Synchronisierung Synchronisierungssymbole (60, 61, 62, 63) des ersten Signals (28, 33) und des zweiten Signals (27) genutzt werden.

7. Messverfahren nach Anspruch 6,
wobei
für die Synchronisierung Rahmennummern des ersten Signals (28, 33) und des zweiten Signals (27) genutzt werden.

8. Messverfahren nach einem der Ansprüche 5 bis 7,
wobei
Daten, welche die Mobilstation (31) von der Relay-Station (22) empfangen hat oder an die Relay-Station (22) gesendet hat, mit dem ersten Signal (28, 33) und mit dem zweiten Signal (27) verglichen werden.

## Claims

1. System for measurement of mobile radio relay stations (22),
with a measuring device (20) which has at least one antenna (24) and a processing device (23),
a base station (21) or a mobile station (31) both of which are in each case configured to send a first signal (28, 33) to a relay station (22),
and a relay station (22) which is configured to generate a second signal (27) derived from the first signal (28, 33) and send this out,
wherein each antenna (24) of the measuring device is configured to receive the first signal (28) and the second signal (27),
wherein the processing device (23) of the measuring device is configured to compare the received signals (27, 28),
**characterised in that** the processing device (23) is configured to carry out a correlation of the first signal (28, 33) and the second signal (27) to determine a time offset between the second signal (27) and the first signal (28, 33).

2. System according to claim 1,
wherein the processing device (23) is configured to carry out a synchronisation of the first signal (28, 33) and the second signal (27), and
the processing device (23) is configured to use synchronisation symbols (60, 61, 62, 63) of the first signal (28, 33) and the second signal (27) for the synchronisation.

3. System according to claim 2,
wherein the processing device (23) is configured to use frame numbers of the first signal (28, 33) and the second signal (27) for the synchronisation.

4. System according to one of claims 1 to 3,
wherein the measuring device is connected with the mobile station (31), and
the measuring device is configured to receive from the mobile station (31) data which the mobile station (31) has received from the relay station (22) or sent to the relay station (22), and
the measuring device is configured to compare the received data with the first signal (28, 33) and with the second signal (27).

5. Measuring method for measurement of mobile radio relay stations,
wherein a base station (21) or a mobile station (31) sends a first signal (28, 33) to a relay station (22),
wherein the relay station (22) generates a second signal (27) derived from the first signal (28, 33) and sends it out,
wherein the first signal (28, 33) and the second signal (27) are received by a measuring device (20),
wherein the received signals (27, 28, 33) are compared by the measuring device (20), **characterised in that** a correlation of the first signal (28, 33) and the second signal (27) is carried out by the measuring device (20) to determine a time offset between the second signal (27) and the first signal (28, 33).

6. Measuring method according to claim 5,
wherein a synchronisation of the first signal (28, 33) and the second signal (27) is carried out, and
synchronisation symbols (60, 61, 62, 63) of the first signal (28, 33) and the second signal (27) are used for the synchronisation.

7. Measuring method according to claim 6,
wherein frame numbers of the first signal (28, 33) and the second signal (27) are used for the synchronisation.

8. Measuring method according to one of claims 5 to 7,
wherein data which the mobile station (31) has received from the relay station (22) or sent to the relay station (22) is compared with the first signal (28, 33) and with the second signal (27).

## Revendications

1. Système pour la mesure de stations relais de téléphonie mobile (22),
comportant un dispositif de mesure (20), qui comporte au moins une antenne (24) et une unité de traitement (23),
une station de base (21) ou une station mobile (31), qui sont réalisées toutes les deux respectivement pour envoyer un premier signal (28, 33) à une station relais (22),
et une station relais (22), qui est réalisée de manière à générer un second signal (27) dérivé du premier signal (28, 33) et envoyer celui-ci,
dans lequel chaque antenne (24) du dispositif de mesure est réalisée de manière à recevoir le premier signal (28) et le second signal (27),
dans lequel l'unité de traitement (23) du dispositif de mesure est réalisée de manière à comparer les signaux reçus (27, 28), **caractérisé en ce que**
l'unité de traitement (23) est réalisée de manière à effectuer une corrélation du premier signal (28, 33) et du second signal (27) pour déterminer un décalage temporel entre le second signal (27) et le premier signal (28, 33).

2. Système selon la revendication 1, dans lequel
l'unité de traitement (23) est réalisée de manière à effectuer une synchronisation du premier signal (28, 33) et du second signal (27), et
l'unité de traitement (23) est réalisée de manière à utiliser des symboles de synchronisation (60, 61, 62, 63) du premier signal (28, 33) et du second signal (27) pour la synchronisation.

3. Système selon la revendication 2, dans lequel
l'unité de traitement (23) est réalisée de manière à utiliser des numéros de trame du premier signal (28, 33) et du second signal (27) pour la synchronisation.

4. Système selon l'une des revendications 1 à 3, dans lequel
le dispositif de mesure est relié à la station mobile (31), et
le dispositif de mesure est réalisé de manière à recevoir de la station mobile (31) des données, que la station mobile (31) a reçu de la station relais (22) ou a envoyé à la station relais (22), et
le dispositif de mesure est réalisé de manière à comparer les données reçues au premier signal (28, 33) et au second signal (27).

5. Procédé de mesure pour mesurer des stations relais de téléphonie mobile,
dans lequel une station de base (21) ou une station mobile (31) envoie un premier signal (28, 33) à une station relais (22),
dans lequel la station relais (22) génère et envoie un second signal (27) dérivé du premier signal (28, 33),
dans lequel le premier signal (28, 33) et le second signal (27) sont reçus par un dispositif de mesure (20),
dans lequel les signaux reçus (27, 28, 33) sont comparés par le dispositif de mesure,
**caractérisé en ce que**
une corrélation du premier signal (28, 33) et du second signal (27) est effectuée par le dispositif de mesure (20) pour déterminer un décalage temporel entre le second signal (27) et le premier signal (28, 33).

6. Procédé de mesure selon la revendication 5, dans lequel,
une synchronisation du premier signal (28, 33) et du second signal (27) est effectuée, et
des symboles de synchronisation (60, 61, 62, 63) du premier signal (28, 33) et du second signal (27) sont utilisés pour la synchronisation.

7. Procédé de mesure selon la revendication 6, dans lequel
des numéros de trame du premier signal (28, 33) et du second signal (27) sont utilisés pour la synchronisation.

8. Procédé de mesure selon l'une des revendications 5 à 7, dans lequel
des données, que la station mobile (31) a reçu de la station relais (22) ou a envoyé à la station relais (22), sont comparés au premier signal (28, 33) et au second signal (27).
